# FASCICULE DE BREVET EUROPEEN

(11) **EP 4 143 022 B1**
(45) Date de publication et mention de la délivrance du brevet: **27.03.2024**
(21) Numéro de dépôt: 21740162.9
(22) Date de dépôt: 23.06.2021
(51) Int. Cl.: B32B 5/02, B32B 7/12, B32B 27/08, B32B 27/12, B32B 27/30, E04F 15/10

(54) **REVETÊMENT DE SOL À COUCHE D'USURE IGNIFUGÉE**
BODENBELAG MIT FEUERFESTER VERSCHLEISSSCHICHT
FLOOR COVERING WITH FIREPROOF WEAR LAYER

(30) Priorité: 02.07.2020 FR 2006972
(43) Date de publication de la demande: 08.03.2023
(73) Titulaire: GERFLOR, 69100 Villeurbanne (FR)
(72) Inventeur: BALAMOUTOFF, Alexia, 69007 LYON (FR); CINAUSERO, Nicolas, 69270 FONTAINES-SAINT-MARTIN (FR)
(74) Mandataire: Cabinet Laurent & Charras
(86) Numéro de dépôt international: PCT/FR2021/051142
(87) Numéro de publication internationale: WO 2022/003274

(56) Documents cités:
- CN-A- 108 822 633
- CN-A- 109 575 481
- CN-A- 110 628 147

## Description

### Domaine technique

La présente invention concerne un revêtement multicouche destiné à être utilisé en tant que revêtement de sol, notamment pour des véhicules de transport de personnes, par exemple dans les domaines terrestre, maritime, ferroviaire, et aéronautique.

### Art antérieur

Dans le domaine du transport, notamment maritime, ferroviaire, ou aéronautique, les industriels sont constamment à la recherche de nouveaux matériaux permettant de réduire les coûts des appareils (train, bateau, avion).

A titre d'exemple, il peut s'agir de l'optimisation du fonctionnement de l'appareil par mise au point et utilisation de nouveaux matériaux qui présentent des propriétés physiques satisfaisantes, notamment la réduction des émissions de fumées et de l'opacité des fumées générées lorsqu'un incendie se déclenche dans l'appareil.

Les industriels ont notamment cherché à améliorer ces propriétés pour les revêtements de sol.

De manière générale, un revêtement de sol est constitué d'une pluralité de couches assemblées entre elles. En particulier, un revêtement de sol aéronautique peut comprendre une couche de renfort en contact avec le sol qui assure la rigidité du revêtement. En outre, une couche de surface (appelée également couche d'usure) apporte notamment des propriétés de résistance à l'usure ou l'abrasion. La couche de surface peut également avoir pour fonction de protéger une éventuelle couche de décor ou d'impression sur laquelle peuvent être imprimés des motifs susceptibles d'être vus par un usager de l'appareil.

Concernant l'amélioration des propriétés antifumées des revêtements de sol, le document CN 109487985 décrit un revêtement de sol comprenant une couche transparente, une couche de décor, et une couche d'envers comprenant entre autre de l'hydrotalcite en tant qu'agent ignifugeant ou retardateur de flamme.

Ce document CN 109487985, comme la plupart des documents, utilise une couche d'envers contenant des agents ignifugeants, et limite l'épaisseur de la couche d'usure transparente en polychlorure de vinyle (acronyme PVC).

Cependant cette approche ne permet pas de réduire significativement la toxicité et l'opacité des fumées en cas d'incendie.

Le document WO 2017/201802 décrit une alternative pour la réalisation de couche d'usure ou d'envers, en ce qu'il propose de les fabriquer en polyuréthane thermoplastique (acronyme TPU) à la place du PVC plastifié. La toxicité des fumées générées en cas d'incendie du revêtement multicouche est ainsi réduite.

Un inconvénient majeur à cette alternative est que le TPU présente un coût nettement supérieur au PVC, pour des propriétés mécaniques similaires voire inférieures. D'autre part, l'utilisation de TPU nécessite l'incorporation d'ignifugeants pour ne pas dégrader les propriétés de résistance au feu du revêtement, notamment la propagation de flamme.

Par ailleurs, outre ses propriétés de résistance à l'usure, à l'abrasion ou à la glissance, la couche de surface doit généralement être transparente, en particulier lorsqu'elle recouvre une couche de décor munie d'un motif devant être visible par les usagers de l'appareil.

Or, les solutions décrites dans l'état de l'art consistant à ajouter des ignifugeants classiques tels que l'hydroxyde d'aluminium ATH ou des charges dans la couche de surface transparente, entraine une dégradation voire une perte de sa transparence.

CN 108 822 633 A divulgue un revêtement de sol multicouche comprenant, depuis la base vers le sommet dudit revêtement : une couche résistante à l'eau et aux moisissures, une couche de renfort, une couche de stabilisation en fibres de verre, une couche avec un décor floral et une couche d'usure, transparente et résistante au vieillissement. La couche de stabilisation est imprégnée par un mélange d'une résine PVC (100-130 parties en poids), d'un additif stabilisateur à la chaleur (3-4 parties ne poids) et d'autres composés. Ledit agent stabilisateur contient du stéarate de zinc, du stéarate de calcium, de l'hydrotalcite et de la paraffine dans un ratio 2:2:1:1.

### Exposé de l'invention

Un but de l'invention est de proposer revêtement de sol multicouche permettant de surmonter les inconvénients mentionnés précédemment.

L'invention vise tout particulièrement à fournir un tel revêtement de sol multicouche permettant de réduire l'émission, la toxicité, et l'opacité des fumées émises en cas d'incendie dudit revêtement.

Un autre but de l'invention est de fournir un tel revêtement de sol multicouche permettant en outre de bénéficier des bonnes propriétés mécaniques et du coût relativement bas du PVC par rapport à d'autres polymères utilisables dans de tels revêtements.

A cette fin, l'invention propose un revêtement de sol multicouche comprenant, depuis la base vers le sommet dudit revêtement :
- une couche d'envers A,
- une couche de décor B, se présentant avantageusement sous la forme d'un support imprimé ou d'une couche d'encre imprimée sur la couche d'envers A ou sur l'envers de la couche de surface C,
- une couche de surface C,
dans lequel la couche de surface C comprend :
* une matrice polymère comprenant du polychlorure de vinyle (PVC), et
* une charge minérale comprenant de l'hydrotalcite, l'hydrotalcite étant utilisé comme ignifugeant et représentant au moins 3%, préférentiellement au moins 5%, par rapport au poids de la couche de surface C.

L'hydrotalcite présente l'avantage de pouvoir être facilement dispersé dans le PVC, sans altérer les couleurs ou la transparence du PVC, et en apportant des propriétés ignifugeantes.

Dans un mode de réalisation particulier, la différence, en valeur absolue, entre l'indice de réfraction du polychlorure de vinyle et l'indice de réfraction de l'hydrotalcite est inférieure ou égale à 0,1. Le polychlorure de vinyle et l'hydrotalcite peuvent présenter des indices de réfraction identiques.

De manière surprenante, le Demandeur a découvert que l'utilisation d'hydrotalcite en tant que charge minérale ignifugeante pour fabriquer une couche de surface comprenant du polychlorure de vinyle (acronyme PVC), en respectant une quantité d'au moins 3%, préférentiellement au moins 5%, par rapport au poids de la couche de surface C, permet :
- d'une part de réduire l'émission, la toxicité, et l'opacité des fumées émise en cas d'incendie dudit revêtement, et
- d'autre part de conserver la transparence de la couche de surface, laissant ainsi la couche de décor sous-jacente visible par les usagers de l'appareil dans lequel est positionné le revêtement.

En effet, l'hydrotalcite, utilisé selon la présente invention en tant qu'ignifugeant, présente l'avantage de bien se disperser dans le PVC, et n'altère pas les couleurs ou la transparence du matériau polymère après mise en oeuvre.

Dans un mode de réalisation particulier, la quantité, en poids, d'hydrotalcite dans la couche de surface C est inférieure à 35%, préférentiellement inférieure à 20%, plus préférentiellement inférieure à 10%. Une quantité inférieure à 35% permet d'améliorer nettement l'ignifugation tout en limitant l'impact sur la transparence du PVC. Une quantité inférieure à 10%, en poids, permet d'obtenir une couche de surface dont la transparence est sensiblement identique à la même couche de surface sans hydrotalcite. En d'autres termes, une quantité inférieure à 10%, en poids, permet de ne pas altérer la transparence de la couche de surface tout en apportant les propriétés ignifuges.

On entend généralement par « couche transparente », une couche dont la valeur de contraste est supérieure à 47. Le contraste peut être mesuré au moyen d'un spectrocolorimètre, par exemple en suivant les conditions de mesures suivantes : illuminant D65, observateur 10°, une géométrie de mesure d/8° (diffus de 8°), et une composante spéculaire inclus SCI (permettant de s'affranchir de l'influence de la brillance).

Les couches d'envers A, de décor B, et de surface C sont de préférence successives, c'est-à-dire en contact les unes des autres. Au moins deux d'entre elles peuvent éventuellement être séparées par une couche d'adhésif, par exemple un film thermofusible, un film thermo-adhésif ou un film thermocollant. Le film thermofusible, thermo-adhésif ou thermocollant est particulièrement adapté lorsque la couche de décor B est un support imprimé de type complexe comprenant une grille et un non-tissé. En revanche, lorsque la couche de décor B est un support imprimé de type film PVC, un assemblage classique sans colle peut être mis en oeuvre, par exemple par thermolamination.

De manière alternative, lesdites couches d'envers A, de décor B, et de surface C peuvent être séparées les unes des autres par d'autres couches intermédiaires.

A ce sujet, dans la suite du présent texte, le fait qu'une première couche soit agencée sur (respectivement sous) une deuxième couche signifie que la première couche est située au-dessus (respectivement en-dessous) de la deuxième couche lorsque la couche est observée depuis sa base vers son sommet, mais n'implique pas nécessairement un contact direct entre la première couche et la deuxième couche.

De manière générale, une couche comprend deux faces principales correspondant à une face supérieure et à une face inférieure.

### La couche d'envers A

La couche d'envers A, appelée également « couche intermédiaire », apporte de l'épaisseur au revêtement de sol. Elle peut être agencée sur une couche de renfort sous-jacente comme il sera décrit dans la suite du présent texte.

La couche d'envers A permet notamment d'assurer une bonne soudabilité sur les bords du revêtement. C'est notamment le cas lorsque des joints sont appliqués en lisière de produit pour assurer l'étanchéité du revêtement de sol en bordure. Cette étanchéité peut être réalisée par soudabilité à chaud à l'aide d'un cordon de soudure, ou par utilisation de mastics. La bonne tenue mécanique du joint peut dépendre non seulement des matériaux utilisés mais aussi de la surface de contact, donc notamment de l'épaisseur du produit.

De plus, la couche d'envers A permet d'apporter de l'opacité lorsqu'une couche de décor, ou couche imprimée, sur laquelle sont imprimés des motifs est positionnée sur celle-ci, ou sur une couche supérieure, jouant ainsi le rôle d'un fond permettant à un usager de mieux distinguer les motifs imprimés sur la couche de décor sus-jacente par contraste avec la couche d'envers A.

Selon un mode de réalisation, la couche A comprend une couche de renfort, de préférence une grille de renfort, intercalée entre deux couches d'envers A et A". Dans ce cas, la couche A comprend ainsi, de sa base vers son sommet, une première couche d'envers, une couche de renfort, et une deuxième couche d'envers A". Les deux couches d'envers A et A" peuvent avoir des compositions identiques ou différentes. Ce mode de réalisation est particulièrement adapté lorsque la couche B ne comprend pas de couche de renfort, de préférence une grille de verre et un non-tissé, comme expliqué dans la suite du présent texte.

La couche d'envers A comprend avantageusement un polymère choisi dans le groupe comprenant le polychlorure de vinyle, le copolymère éthylène acétate de vinyle, et leurs mélanges.

De manière avantageuse, la couche d'envers A est constituée de, ou essentiellement constituée de polychlorure de vinyle.

De manière avantageuse, la couche d'envers A ne comprend pas de polyuréthane ou de polyuréthane thermoplastique.

La masse surfacique de la couche d'envers A est de préférence comprise entre 300 g/m² et 3000 g/m², plus avantageusement entre 600 g/m² et 2200 g/m². En particulier, pour des applications dans le domaine ferroviaire ou de la marine, la masse surfacique de la couche d'envers A est de préférence comprise entre 1500 et 2500 g/m², plus préférentiellement entre 2100 g/m² et 2200 g/m². Pour des applications dans le domaine de l'aéronautique, la masse surfacique de la couche d'envers A est de préférence comprise entre 500 et 1200g/m², plus préférentiellement entre 600 g/m² et 1000 g/m².

La couche d'envers A présente une épaisseur avantageusement comprise entre 0,10 millimètres et 5 millimètres, plus avantageusement entre 0,20 millimètres et 2 millimètres, encore plus avantageusement entre 0,30 millimètres et 1,50 millimètres, et de manière davantage préférée entre 1,3 mm et 1,45 mm.

Selon un mode de réalisation particulier, la couche d'envers A comprend des charges, notamment des charges inorganiques, par exemple des argiles, de la silice, du carbonate de calcium, seuls ou en mélange.

Ces charges peuvent représenter de 30% à 80 % en poids, par rapport au poids de la couche d'envers A, avantageusement de 50% à 70% en poids, alternativement 40% à 60% en poids.

Selon un autre mode de réalisation particulier, la couche d'envers A résulte d'un assemblage de deux couches obtenues à partir d'un même polymère, l'une des deux couches contenant plus de charges inorganiques que l'autre afin de diminuer le coût du produit final.

A titre d'exemple, la couche d'envers A peut être obtenue par l'assemblage d'une première couche comprenant entre 40% et 60% de charges inorganiques en poids et une seconde couche comprenant entre 20% et 40% de charges inorganiques en poids, les charges représentant de 30% à 80 % en poids, par rapport au poids de la couche d'envers A obtenue (première + seconde couches), avantageusement de 50% à 70% en poids, alternativement de 40% à 60% en poids.

A titre d'exemple, la couche d'envers A peut être obtenue par l'assemblage d'une première couche inférieure comprenant entre 40% et 60%, préférentiellement environ 50% d'hydrotalcite en poids, et une seconde couche supérieure comprenant entre 40% et 60%, préférentiellement environ 50% en poids d'une composition comprenant entre 50 et 100% de charges inorganiques et entre 0 et 50% d'hydrotalcite en poids.

Selon un autre mode de réalisation particulier, la couche d'envers A comprend au moins un additif, tel qu'un plastifiant, un ignifugeant (par exemple de l'hydrotalcite ou du trihydroxyde d'aluminium), et/ou des pigments.

Les ignifugeants peuvent notamment être de la famille des oxydes métalliques tel que l'oxyde d'antimoine, l'oxyde de magnésium ou l'oxyde de zinc, ainsi que des composés de la famille des hydroxydes métalliques parmi lesquels le trihydroxyde d'aluminium (ATH), la boehmite (AOOH), le dihydroxyde de magnésium (MDH), les hydroxydes doubles lamellaires (notamment les hydrotalcites), l'hydromagnésite ou le mélange d'hydromagnésite et d'huntite. Ces agents ignifugeants peuvent être utilisés seuls ou en mélange. Des mélanges connus sont par exemples l'ATH en combinaison avec le MDH, ce mélange permettant un effet sur une gamme de température plus étendue.

Avantageusement, la couche d'envers A comprend entre 0% et 80% d'au moins un agent ignifugeant, plus avantageusement entre 5% et 65%, en poids par rapport au poids de la couche d'envers A.

Avantageusement, la couche d'envers A comprend également des agents de synergie et/ou suppresseurs de fumées, notamment des composés de la famille des oxydes et/ou hydroxydes métalliques tels que l'oxyde de magnésium, l'oxyde de zinc, le stannate de zinc, hydroxy stannate de zinc, le molybdate de zinc, le molybdate de calcium, le molybdate de calcium et de zinc. Ces agents de synergie et/ou suppresseurs de fumées peuvent être utilisés seuls ou en mélange. Les agents de synergie et/ou suppresseurs de fumées ne sont généralement efficaces que lorsqu'ils sont associés à un ou des agent(s) ignifugeant(s) dont ils renforcent l'effet ou complémentent l'action.

Avantageusement, la couche d'envers A la comprend entre 0% et 20% d'agents de synergie et/ou suppresseurs de fumées, avantageusement entre 0,5% et 8% en poids d'agents de synergie et/ou suppresseurs de fumées, en poids par rapport au poids de la couche d'envers A.

Avantageusement, la couche d'envers A comprend un mélange 1) d'agents ignifugeant et 2) d'agents de synergie et/ou suppresseurs de fumée, ce mélange comprenant au moins un oxyde métallique et un hydroxyde métallique.

De façon préférentielle et de manière à limiter le nombre de constituants différents dans la composition du revêtement de sol, la couche d'envers A comprend comme seul agent ignifugeant de l'hydrotalcite. Ceci permet d'utiliser le même ignifugeant dans la couche de surface C et dans la couche d'envers A.

De préférence, la couche d'envers A comprend du PVC plastifié, c'est-à-dire du PVC auquel a été ajouté un ou plusieurs plastifiants. Le PVC plastifié peut également être désigné en tant que PVC souple. De façon plus préférentielle, la couche d'envers comprend du PVC plastifié et comme seul agent ignifugeant de l'hydrotalcite, ainsi qu'éventuellement des charges inorganiques tel que du carbonate de calcium.

A titre d'exemple, le plastifiant peut être un plastifiant de type phosphate ester. Il peut notamment être choisi dans le groupe comprenant le DIDP (phtalate diisodécylique), le DINP (diisononyl phthalate) et les plastifiants esters de phosphate.

Cet additif de la couche d'envers A peut représenter de 10% à 30 %, avantageusement de 12% à 18% en poids, en poids, par rapport au poids de la couche d'envers A.

### La couche de décor B

La couche de décor B, dite également couche d'impression, est avantageusement agencée sur la couche d'envers A. Elle se présente avantageusement sous la forme d'un support imprimé ou d'une couche d'encre imprimée sur la couche d'envers A ou sur l'envers de la couche de surface C.

La couche de décor B peut également résulter de la présence de pigments dans la couche A et/ou dans la couche B.

Le motif ou décor peut être imprimé sur la face supérieure de la couche de décor B, c'est-à-dire la face de la couche de décor B qui se situe au regard de la face inférieure de la couche de surface C.

Selon un mode de réalisation, la couche de décor B comprend un support imprimé et la couche d'envers A comprend des pigments. Un motif est alors formé par la combinaison des pigments de la couche d'envers A et de la couche de décor B. A titre d'exemple, les pigments de la couche d'envers A peuvent former un fond uni qui fait ressortir par contraste le motif imprimé sur la couche de décor B.

Selon un mode de réalisation préféré, notamment lorsqu'elle se présente sous la forme d'un support imprimé, la couche de décor B comprend un support qui peut également jouer le rôle de renfort du revêtement de sol. A ce titre, le support peut comprendre des fibres de renfort ou être un moyen de renfort tel qu'une grille, un tissu ou un non-tissé.

Alternativement, la couche de décor B peut être un film, de préférence dépourvu de fibres de renfort. Dans ce cas, la couche de décor B comprend de préférence un polymère thermoplastique choisi dans le groupe comprenant les résines, par exemple le polychlorure de vinyle (PVC), les polyoléfines, le polyéthylène téréphtalate (PET) ou le polyéthylène téréphtalate glycolisé (PETG), et leurs mélanges.

De préférence, la couche de décor B comprend un support imprimé constitué d'un complexe formé d'une grille de verre et d'un non-tissé en polyester, sur lequel est imprimé un motif. Ce support peut avantageusement être enduit avant impression. Il peut s'agir d'une enduction d'un plastisol PVC gélifié.

De manière avantageuse, une seule parmi la couche d'envers A et la couche de décor B comprend un renfort, par exemple des fibres de renfort ou une grille de renfort par exemple.

La couche de décor B est avantageusement collée à la couche de surface par l'intermédiaire d'une couche d'adhésif H. Dans un cas particulier, pour bien faire adhérer la couche de surface C à la couche de décor B, la couche d'adhésif H peut être située entre la couche de décor B et la couche d'envers A, ce qui permet de coller la couche de surface C par traversage et diffusion de la colle dans la couche de décor B pendant le procédé de mise en oeuvre lorsque la couche B est choisie comme complexe.

La couche d'adhésif H est par exemple un film thermofusible ou un film thermocollant, de type copolyamide ou copolyester ou thermoplastique polyuréthane.

Le motif ou décor peut être imprimé par toutes techniques connues, notamment par héliogravure ou par impression numérique.

De façon alternative, la couche de décor B peut consister en une couche d'encre directement imprimée sur la face inférieure de la couche de surface C, en regard de la couche d'envers A ou sur la face supérieure de la couche d'envers A, en regard de la couche de surface C.

### La couche de surface C

La couche de surface C, dite également couche d'usure, est agencée sur la couche de décor B. Elle présente des propriétés de résistance aux taches, à l'encrassement, de résistance à l'abrasion et de résistance à la glissance notamment. Elle peut également intégrer la couche B lorsque cette dernière est une couche d'encre imprimée sur l'envers de la couche de surface C.

Comme déjà indiqué, la couche de surface C comprend :
- une matrice polymère comprenant du polychlorure de vinyle, et
- une charge minérale ignifugeante comprenant de l'hydrotalcite.

De préférence, la matrice polymère comprend du PVC plastifié (défini dans la présentation de la couche A). De manière davantage préférée, la matrice polymère est constituée de, ou essentiellement constituée de PVC plastifié.

La couche C pourra être protégée par une couche de vernis C' afin d'améliorer la résistance aux taches et à l'encrassement du revêtement de sol. Lorsqu'elle est présente, la couche C' est déposée sur la couche C, c'est-à-dire sur la face opposée à la face en regard de la couche B.

A titre d'exemple, le plastifiant peut être un plastifiant de type phosphate ester. Il peut notamment être identique ou différent de celui de la couche d'envers A. Il peut également être choisi parmi les plastifiants de type non phosphate ou de type phtalate. A titre d'exemple le plastifiant peut être choisi parmi le DIDP (phtalate diisodécylique), le DINP (diisononyl phthalate), le DINCH (Hexahydrophtalate de diisononyle) et les plastifiants de type esters de phosphate tel que le 2-ethylhexyldiphenyl phosphate.

La couche de surface C peut comprendre entre 0 et 50 pcr de plastifiant, préférentiellement 30 et 45 pcr (1 pcr = 1 part pour cent parts en poids de résine, la résine correspondant à la matrice polymère de la couche C).

L'hydrotalcite, fait partie de la famille des hydroxyde double lamellaire ou HDL (Layered double hydroxide en anglais, acronyme LDH), ou encore argile anionique, beaucoup moins présente à l'état naturel que les argiles cationiques, qui n'a été étudiée qu'à partir des années 1960. L'hydrotalcite étant le minéral le plus connu dans la famille des HDL, cette famille est souvent appelée par extension ou abus de langage la famille des hydrotalcites. La différenciation peut se faire par le type de cations et d'anions contenus dans le minéral (voir notamment la thèse « Les Hydroxydes Doubles Lamellaires au coeur de la biotechnologie : évaluation des applications médicales et environnementales » (Mohamed Amine Djebbi, 2017). Cependant, la nomenclature des HDL reste complexe et mène souvent à des confusions.

La formule générale de l'hydroxyde double lamellaire est avantageusement la suivante : [M^{II}₁₋ₓ M^{III}ₓ (OH)₂]^{x+} [Aⁿ⁻_{x/n}, yH₂O] avec :
- M^{II} et M^{III} : respectivement des cations métalliques divalents (par exemple des ions magnésium Mg²⁺ et/ou Zn²⁺ dans le cas de l'hydrotalcite) et trivalents (par exemple des ions aluminium Al³⁺ dans le cas de l'hydrotalcite),
- Aⁿ⁻ : anions interfolaires (par exemple des ions carbonate CO₃²⁻ dans le cas des hydrotalcites),
- x : densité de charge (généralement comprise entre 0,20 et 0,33),
- y étant le nombre de molécule d'eau compris généralement entre 0 et 10,
- n étant compris entre 1 et 3.

L'hydroxyde double lamellaire correspondant à cette formule présente un empilement du couple de couches suivant :
- un feuillet de formule [M^{II}₁₋ₓ M^{III}ₓ (OH)₂]^{x+},
- un espace interfoliaire de formule [Aⁿ⁻_{x/n} (H₂O)_{y}],

La structure lamellaire peut inclure l'empilement d'un ou plusieurs couples de feuillets.

Les anions intercalés entre les feuillets de formule [M^{II}₁₋ₓ M^{III}ₓ (OH)₂]^{x+} assurent la neutralité de l'hydrotalcite et sont solvatés par les molécules d'eau présentes également dans cet espace interfoliaire.

De préférence, l'hydrotalcite utilisée dans la couche de surface C est de type Mg-Zn-Al ou Mg-Al.

Deux exemples non limitatifs d'hydrotalcites utilisables dans le revêtement de l'invention sont les suivants :
- [MgₓZn_{y}Al₂(OH)_{2(2+x+y)}] CO₃, nH₂O (x=2-4, y=2-4, n=0-10),
- [MgₓAl₂(OH)₂₍₂₊ₓ₎] CO₃, nH₂O (x=4-6, n=0-10).

De préférence, la couche C est constituée, ou essentiellement constituée, de PVC (avantageusement plastifié) et d'hydrotalcite.

Selon un mode de réalisation préféré, l'hydrotalcite représente de 5% à 50% en poids, et de préférence de 9% à 33%, en poids par rapport au poids de la couche de surface C.

La couche de surface C présente une épaisseur avantageusement comprise entre 0,1 mm et 2 mm, de préférence entre 0,1 et 1,5 mm.

L'ensemble formé par les couches d'envers A, de décor B, et de surface C peut être utilisé tel quel en tant que revêtement pour des applications diverses, par exemple le transport maritime.

De préférence, l'hydrotalcite se présente sous la forme de particules ayant une taille avantageusement comprise entre 200 nm et 1 µm, de préférence entre 400 µm et 700 µm.

Les particules d'hydrotalcite de taille inférieure à 100 nm sont considérées comme étant des particules nanométriques. D'autre part, des particules d'hydrotalcite de taille supérieure à 1 µm peuvent éventuellement altérer la transparence de la couche de surface C.

De manière générale, la taille désigne la dimension la plus importante des particules, par exemple le diamètre pour des particules sphériques ou la longueur pour des particules cylindriques ou en forme de bâtonnets.

La taille désigne généralement la taille médiane D50. Ainsi, en général, 50% en nombre des particules ont une taille inférieure à la taille indiquée ci-dessus et 50% en nombre une taille supérieure.

### Couche de renfort A'

Selon un mode de réalisation particulier, l'ensemble formé par les couches d'envers A, de décor B, et de surface C peut être assemblé à une couche de renfort fibreux A' avantageusement via une couche d'adhésif B'.

Ce mode de réalisation est particulièrement adapté pour des applications où les contraintes mécaniques sont fortes et nécessitent la présence d'une couche de renfort à la base du revêtement, telles que le transport aérien notamment. Dans ce cas, la couche A et/ou le bicouche A/A" et/ou la couche B peuvent également comprendre un renfort fibreux (fibres, grille, tissu ou non-tissé).

Le cas échéant, la couche de renfort fibreux A' correspond à la base, c'est-à-dire la couche la plus inférieure, du revêtement multicouche. Elle est alors destinée à être en contact avec le sol sur lequel le revêtement est installé. Le revêtement multicouche peut ainsi reposer sur le panneau de plancher d'un avion par exemple, l'interface entre la couche de renfort fibreux A' et le plancher pouvant être assurée par l'intermédiaire d'un adhésif.

La couche de renfort fibreux A' comprend des fibres se présentant avantageusement sous la forme d'un tissu, d'une grille, ou d'un non-tissé.

La couche de renfort fibreux A' peut être composée d'un matériau composite comprenant des fibres, et d'une résine polymère thermodurcissable ou thermoplastique.

De manière avantageuse, la couche de renfort fibreux A' comprend, en poids par rapport au poids de ladite couche A' :
- de 20% à 80% de fibres de renfort, plus avantageusement de 45% à 60 %,
- de 20% à 80% de résine polymère, plus avantageusement de 40% à 55%.

Les fibres de renfort (quelle que soit leur forme : fibres individualisées, tissu, non-tissé, grille...) participent à la rigidification de la couche qui les contient (A, A', A" ou B, ou entre A et A"). Elles peuvent être minérales ou organiques. Il peut notamment s'agir de fibres naturelles ou synthétiques apportant du renfort dans un matériau. Ces fibres peuvent être en matériau organique ou inorganique. Il s'agit préférentiellement de fibres d'un matériau choisi dans le groupe comprenant le verre, le carbone, l'aramide, le lin, et le chanvre. Les fibres peuvent être enduites, par exemple dans une résine polymère thermodurcissable.

La résine polymère de la couche de renfort fibreux A' peut notamment comprendre un polymère thermodurcissable ou thermoplastique avantageusement choisi dans le groupe comprenant : résine polyester, résine phénolique, résine époxy, polysulfone, résine vinylester, résine époxy-acrylique, et leurs mélanges.

Selon un mode de réalisation particulier, la couche de renfort fibreux A' peut être constituée de fibres de verre enduites dans une résine polymère thermodurcissable ou thermoplastique, par exemple une résine phénolique. Ce mode réalisation est particulièrement adapté au domaine aéronautique.

Selon un mode de réalisation particulier, la couche de renfort fibreux A' peut être constituée d'un non-tissé, avantageusement en polyester, contrecollé, de préférence avec une colle copolyester. Ce mode réalisation est particulièrement adapté au domaine ferroviaire et favorise le collage sur le plancher.

La masse surfacique de la couche de renfort fibreux A' peut notamment être comprise entre 200 g/m² et 1200 g/m², plus avantageusement entre 300 g/m² et 600 g/m².

D'autre part, la couche de renfort fibreux A' présente une épaisseur avantageusement comprise entre 0,05 millimètres et 1,5 millimètres, plus avantageusement entre 0,2 millimètres et 0,6 millimètres, encore plus avantageusement entre 0,2 millimètres et 0,4 millimètres.

Selon un autre mode de réalisation particulier, la couche de renfort fibreux A' comprend un adhésif permettant de coller le revêtement de sol sur un plancher. Dans ce cas particulier, la couche de renfort fibreux A' peut présenter une masse surfacique supérieure la gamme 200-1200 g/m².

Comme mentionné précédemment, la couche de renfort fibreux A' est destinée à être en contact avec le plancher, par exemple d'un avion, sur lequel est déposé le revêtement multicouche. Elle est avantageusement rendue solidaire de la couche d'envers A grâce à la couche d'adhésif B'.

La couche d'adhésif B' peut notamment être en polymère choisi dans le groupe comprenant : les copolyamides (CoPA), le polyuréthane thermoplastique (TPU), le polyuréthane (PU), l'éthylène-acétate de vinyle (EVA), les copolyesters, et leurs mélanges.

La masse surfacique de la couche d'adhésif B' peut notamment être comprise entre 10 g/m² et 140 g/m², plus avantageusement entre 30 g/m² et 100 g/m².

D'autre part, la couche d'adhésif B' présente une épaisseur avantageusement comprise entre 0,02 millimètres et 0,50 millimètres, plus avantageusement entre 0,04 millimètres et 0,12 millimètres.

Comme déjà indiqué, la couche d'adhésif B' permet d'assurer l'association des couches de renfort fibreux A' et d'envers A. En effet, les résines ou polymères des couches de renfort fibreux A' et d'envers A sont souvent peu compatibles, car la résine polymère de la couche de renfort fibreux A', préférentiellement choisie dans le groupe des résines thermodurcissables, est généralement peu compatible avec les composants de la couche d'envers A avantageusement thermoplastiques.

De façon non limitative, la couche de renfort fibreux A' peut être remplacée par une sous-couche textile et/ou une sous-couche moussée et/ou encore une sous-couche adhésivée. Une sous couche textile peut notamment favoriser le collage sur le sol, notamment avec le plancher d'un train, à l'aide de colle base acrylique ou MS polymère.

Des sous-couches textile sont, par exemple, des sous-couches textile tissées ou non-tissées, par exemple un non-tissé polyester de 80g/m². Une sous-couche adhésivée peut notamment présenter une face d'envers enduite d'un adhésif afin de faciliter la pose du revêtement de sol.

Une sous-couche adhésivée peut être utilisée en combinaison avec une sous couche textile ou une sous couche moussée afin de faciliter la pose du revêtement de sol sans l'ajout supplémentaire de colle.

Selon un mode de réalisation particulier, le revêtement de sol multicouche comprend, depuis sa base vers son sommet :
- une couche de renfort fibreux A' comprenant un non-tissé en polyester (avantageusement pour le domaine ferroviaire) ou des fibres de verre (avantageusement pour le domaine aéronautique),
- une couche d'adhésif B', par exemple une colle copolyester (avantageusement pour le domaine ferroviaire) ou une colle polyuréthane n'étant pas un TPU (avantageusement pour le domaine aéronautique),
- une couche d'envers A comprenant du polychlorure de vinyle,
- une couche de décor B,
- une couche de surface C comprenant :
   * une matrice polymère comprenant du polychlorure de vinyle, et
   * une charge minérale ignifugeante comprenant de l'hydrotalcite.

De manière générale, le revêtement de sol multicouche présente une masse surfacique avantageusement comprise entre 1500 et 3300 g/m².

Le revêtement de sol multicouche présente une épaisseur avantageusement comprise entre 0,8 mm et 6 mm, de préférence entre 1,1 et 2,5 mm.

De manière avantageuse, pour le domaine maritime, le revêtement de sol ne comprend pas de couche de renfort fibreux A'.

### Procédé de fabrication du revêtement multicouche

La présente invention concerne également un procédé de fabrication du revêtement multicouche décrit précédemment. Ce procédé comprend notamment les étapes suivantes :
- fabrication des couches d'envers A, de décor B, et de surface C,
- assemblage desdites couches d'envers A, de décor B, et de surface C pour former le revêtement de sol multicouche,
- optionnellement, fabrication des couches de renfort fibreux A' et d'adhésif B', et l'assemblage desdites couches de renfort fibreux A' et d'adhésif B', pour former le revêtement de sol multicouche.

De préférence, le procédé de fabrication comprend en outre la fabrication de la couche de renfort fibreux A', et son assemblage pour former le revêtement de sol multicouche, par exemple au moyen de la couche d'adhésif B'.

A titre d'exemple, les différentes couches peuvent être préparées séparément, par exemple par calandrage, par enduction, par pressage ou par extrusion. Dans ce cas, elles peuvent être assemblées ultérieurement, par exemple ou moyen d'une couche d'adhésif ou par complexage.

Le complexage consiste à passer des couches pré-chauffées en température, entre deux rouleaux régulés en température qui exercent une pression. Ces rouleaux assurent l'association des couches. Dans ce cas, la présence d'une couche d'adhésif n'est pas nécessaire.

Certaines couches peuvent également être préparées et assemblées simultanément, par exemple par coextrusion. Dans ce cas, la présence d'une couche d'adhésif n'est pas nécessaire.

L'épaisseur du revêtement multicouche ne correspond pas nécessairement à la somme des épaisseurs des couches en raison des étapes d'association et de post-traitement : pressage et éventuel grainage par exemple.

De manière avantageuse, les températures de complexage ou lamination sont comprises entre 100 et 160°C. A titre d'exemple, la pression exercée lors du complexage (ou lamination) peut varier de 8 bar à 20 bar, préférentiellement de 10 bar à 15 bar.

### Description des figures

Les figures suivantes sont données à titre d'exemples illustratifs et non limitatifs :

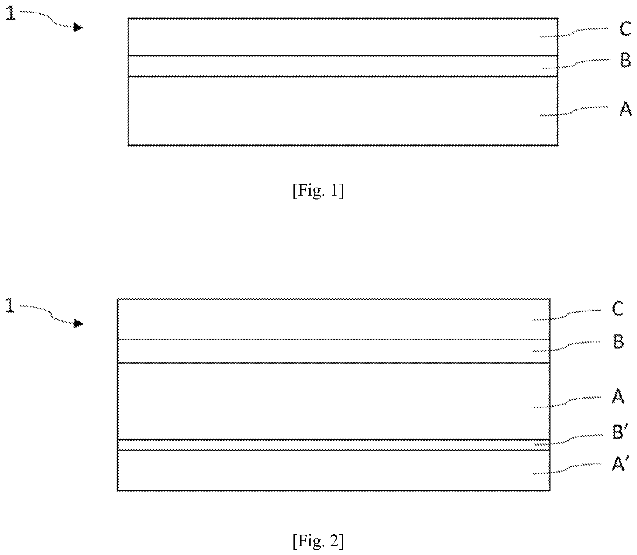

La figure 1 est un schéma d'un revêtement de sol selon l'invention, comprenant une couche d'envers A, une couche de décor B, et une couche de surface C.
La figure 2 est un schéma d'un revêtement de sol selon l'invention, comprenant une couche d'envers A, une couche de décor B, et une couche de surface C, ainsi qu'une couche de renfort fibreux A' et une couche d'adhésif sous-jacentes.

### Description détaillée de l'invention

Plusieurs revêtements multicouches référencés M1 à M10 ont été fabriqués.

Les revêtements M1 à M10 ne diffèrent que par la nature de leur couche de surface C, et comprennent les mêmes couches d'envers A, de décor B, et d'adhésif H permettant de coller ladite couche d'envers A avec la couche de décor B, à savoir :
- couche d'envers A : 100% PVC + plastifiant + charges minérales, épaisseur de 1,5 mm ;
- couche d'adhésif H : film thermofusible copolyamide (coPA), commercialisé sous la référence TC203 par la société PROCHIMIR;
- couche de décor B: complexe comprenant une grille de verre et un non-tissé en polyester, revêtu d'un motif appliqué par impression numérique.

Les couches de surface C des revêtements M1 à M10 ont toutes la même épaisseur de 0,45 mm, et leurs compositions sont les suivantes :
- M1 : PVC plastifié à 38 pcr avec un plastifiant phosphate commercialisé sous la référence Santicizer 141 (acronyme S141) de Valtris; l'acronyme « pcr » signifie « pour cent de résine », il s'agit de la quantité (en poids) de plastifiant pour 100 parts de résine constituée du PVC et du plastifiant. Dans le cas du revêtement M1, la résine est constituée de 38 parts en poids de plastifiant Santicizer 141 pour 100 parts en poids de résine ;
- M2 : PVC plastifié à 38 pcr avec un plastifiant phosphate commercialisé sous la référence Santicizer 148 (acronyme S148) de Valtris;
- M3 : PVC plastifié avec un mélange de deux plastifiants commercialisés respectivement sous la référence S141 (19 pcr) et Cereclor S45 (acronyme C45) de Ineos (19 pcr) ;
- M4 : PVC plastifié à 38 pcr avec le plastifiant S141, additivé avec 9% en poids de silice pyrogénée Evonik Aerosil R805;
- M5 : PVC plastifié à 38 pcr avec le plastifiant S141, additivé avec 5% en poids d'hydroxyde de magnésium Mg(OH)₂ (acronyme MDH) de grade Magnifin H10 du Huber ;
- M6 : PVC plastifié à 38 pcr avec le plastifiant S141, additivé avec 9% en poids d'hydrotalcite n°1 (acronyme HDT-1) de type Mg-Zn-Al ;
- M7 : PVC plastifié à 38 pcr avec le plastifiant S141, additivé avec 23% en poids d'hydrotalcite n°1 (acronyme HDT-1) de type Mg-Zn-Al
- M8 : PVC plastifié à 38 pcr avec le plastifiant S141, additivé avec 33% en poids d'hydrotalcite;n°1 (acronyme HDT-1) de type Mg-Zn-Al
- M9 : PVC plastifié à 38 pcr avec le plastifiant S141, additivé avec 33% en poids d'hydrotalcite; ;n°2 (acronyme HDT-2) de type Mg-Al
- M10 : PVC plastifié à 38 pcr avec le plastifiant S141, additivé avec 33% en poids d'hydrotalcite de grade S944 n°3 (acronyme HDT-3) de type Mg-Zn-Al

On réalise deux éprouvettes de revêtements de 75mm x 75mm pour chacun des revêtements M1 à M10. Ces éprouvettes sont collées sur support aluminium de 1mm avec la colle Bostik ISR 7007 (300g/m2). Après séchage de la colle et conditionnement, les éprouvettes sont testées en chambre à fumées selon la méthode d'essai ISO 5659-2 d'après le requis R10 de l'EN45545 (norme ferroviaire), puis l'on détermine :
- la densité des fumées (fumée n°1 et fumée n°2), ce qui fournit une densité moyenne des fumées sur ces 2 essais (fumée moyenne) ;
- l'indice de toxicité des gaz (ITCg) 4 minutes après le début de l'essai (tox 4 min n°1 et n°2), et 8 minutes après le début de l'essai (tox 8 min n°1 et n°2), ce qui fournit une moyenne de toxicité à 4 minutes (tox 4 min moyenne) et à 8 minutes (tox 8 min moyenne).

La norme ISO 5659-2 correspond à un test feu en chambre à fumées. Les éprouvettes sont soumises à un flux radiatif à 25kW/m² avec flamme pilote. La densité optique de la fumée est suivie pendant 20min (durée du test), et la toxicité des gaz est mesurée suite à deux prélèvements qui ont lieu à 4 et 8min après le début du test.

Les résultats obtenus sont indiqués dans le tableau 1 ci-dessous.

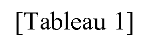

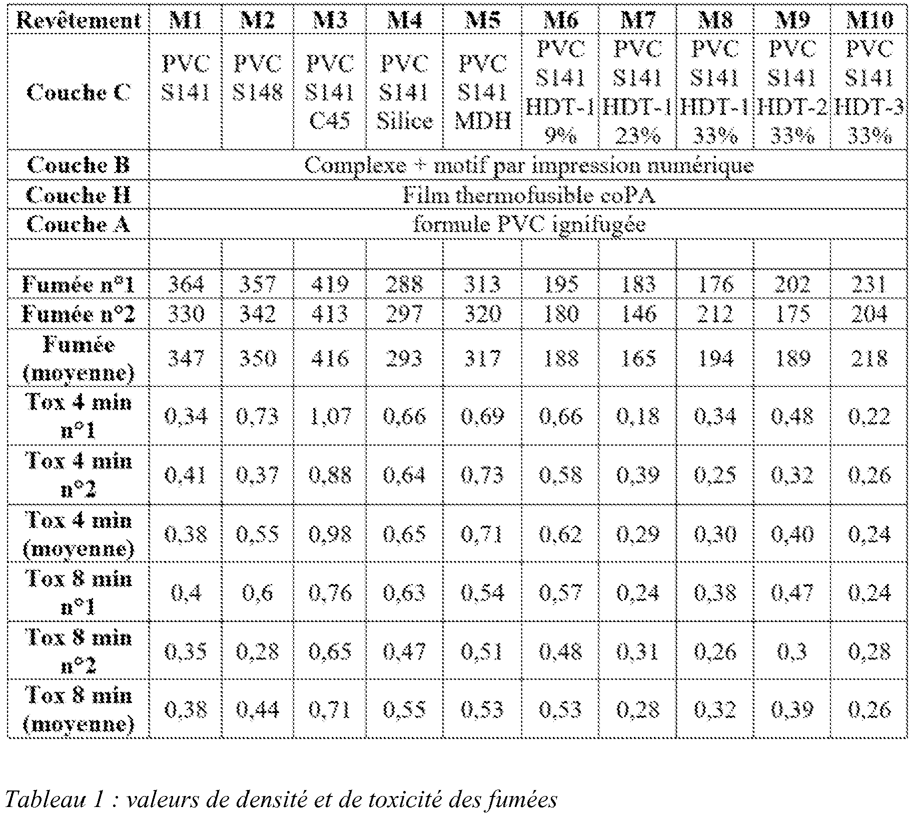

D'après ces résultats, on remarque que les revêtements M1, M2, M3, M4, et M5 de l'état de l'art ne sont pas satisfaisants car la valeur moyenne de densité des fumées est supérieure à 300 (qui correspond au maximum de densité de fumée acceptable pour l'exigence HL2 de la norme EN45545), hormis pour le revêtement M4 dont la valeur moyenne de densité des fumées est toutefois de 293, c'est-à-dire très proche de la valeur seuil 300.

En revanche, les revêtements M6, M7, M8, M9, et M10 de l'invention donnent satisfaction, tant pour la densité des fumées (la valeur moyenne de densité des fumées est inférieure à 200 ou très proche de 200 pour le revêtement M10), que pour la toxicité des gaz (les valeurs moyenne de toxicité à 4 minutes et à 8 minutes sont inférieures à 0,90, toxicité maximale pour l'exigence HL2).

En particulier, en comparant le revêtement M6 (hydrotalcite 9%) au revêtement témoin M1, on remarque que la présence d'hydrotalcite dans la couche de surface diminue de (347-188) / 347 = 45% la densité des fumées dès 9% de charge en poids de la couche de surface C.

Les performances sont encore meilleures avec 23% d'hydrotalcite dans la couche de surface C, tant pour la densité moyenne des fumées (165 pour M7 contre 188 pour M6) que pour la toxicité moyenne des fumées (0,29 pour M7 contre 0,62 pour M6 à 4 minutes, et 0,28 pour M7 contre 0,53 pour M6 à 8 minutes).

Les performances restent excellentes et globalement similaires avec 33% d'hydrotalcite dans la couche de surface C : revêtements M8, M9, et M10. Cependant la couche de surface C est légèrement jaunie.

Les couches de surface C des revêtements M1, M2, M3, M6, M7 et M8 ont une transparence acceptable pour l'application industrielle. Le revêtement M4 est légèrement bleuté, le revêtement M5 est légèrement opaque, et les revêtements M9 et M10 sont transparents mais tendent vers le jaune.

## Revendications

1. Revêtement de sol multicouche comprenant, depuis la base vers le sommet dudit revêtement :
- une couche d'envers A,
- une couche de décor B,
- une couche de surface C,
dans lequel :
la couche de décor B se présente avantageusement sous la forme d'un support imprimé ou d'une couche d'encre imprimée sur la couche d'envers A ou sur l'envers de la couche de surface C,
la couche de surface C comprend :
* une matrice polymère comprenant du polychlorure de vinyle, et
* une charge minérale comprenant de l'hydrotalcite, l'hydrotalcite étant utilisé comme ignifugeant et représentant au moins 3%, préférentiellement au moins 5%, par rapport au poids de la couche de surface C.

2. Revêtement de sol multicouche selon la revendication 1, ***caractérisé* en ce que** la couche de surface C est constituée de polychlorure de vinyle et d'hydrotalcite.

3. Revêtement de sol multicouche selon l'une quelconque des revendications précédentes, ***caractérisé* en ce que** l'hydrotalcite représente de 5% à 50% en poids par rapport au poids de la couche de surface C.

4. Revêtement de sol multicouche selon l'une quelconque des revendications précédentes, ***caractérisé* en ce que** l'hydrotalcite représente de 9% à 33% en poids par rapport au poids de la couche de surface C.

5. Revêtement de sol multicouche selon l'une quelconque des revendications précédentes, ***caractérisé* en ce que** l'hydrotalcite est de type [M^{II}₁₋ₓ M^{III}ₓ (OH)₂] [Aⁿ⁻_{x/n}, yH₂O], avec :
- M^{II} étant un cation métallique divalent comprenant Mg²⁺ et/ou Zn²⁺,
- M^{III} étant un cation métallique trivalent Al³⁺,
- Aⁿ⁻ : anions,
- x : densité de charge, comprise entre 0,20 et 0,33,
- y étant compris entre 0 et 10,
- n étant compris entre 1 et 3.

6. Revêtement de sol multicouche selon l'une quelconque des revendications précédentes, ***caractérisé* en ce que** l'hydrotalcite est sous forme de particules ayant une taille comprise entre 200 nm et 1 µm, de préférence entre 400 µm et 700 µm.

7. Revêtement de sol multicouche selon l'une quelconque des revendications précédentes, ***caractérisé* en ce que** le polychlorure de vinyle de la matrice polymère comprend du polychlorure de vinyle plastifié.

8. Revêtement de sol multicouche selon l'une quelconque des revendications précédentes, ***caractérisé* en ce que** la couche de surface C présente une épaisseur comprise entre 0,1 mm et 2 mm.

9. Revêtement de sol multicouche selon l'une quelconque des revendications précédentes, ***caractérisé* en ce que** la couche d'envers A comprend un polymère choisi dans le groupe comprenant : le polychlorure de vinyle, le copolymère éthylène acétate de vinyle, et leurs mélanges.

10. Revêtement de sol multicouche selon l'une quelconque des revendications précédentes, ***caractérisé* en ce que** le revêtement de sol multicouche comprend, depuis sa base vers son sommet :
- une couche de renfort fibreux A' comprenant un non-tissé en polyester ou des fibres de verre,
- une couche d'adhésif B',
- une couche d'envers A comprenant du polychlorure de vinyle,
- une couche de décor B,
- une couche de surface C comprenant :
* une matrice polymère comprenant du polychlorure de vinyle, et
* une charge minérale ignifugeante comprenant de l'hydrotalcite.

11. Procédé de fabrication d'un revêtement de sol multicouche selon l'une quelconque des revendications 1 à 10, comprenant les étapes suivantes :
- fabrication des couches d'envers A, de décor B, et de surface C,
- assemblage desdites couches d'envers A, de décor B, et de surface C
- optionnellement, fabrication des couches de renfort fibreux A' et d'adhésif B', et l'assemblage desdites couches de renfort fibreux A' et d'adhésif B', pour former le revêtement de sol multicouche.

## Patentansprüche

1. Ein mehrschichtiger Bodenbelag, der von der Basis bis zur Oberseite des Belags folgendes umfasst:
- eine Rückenschicht A,
- eine Dekorschicht B,
- eine Oberflächenschicht C,
wobei:
die Dekorschicht B vorteilhafterweise in Form eines bedruckten Substrats oder einer auf die Rückenschicht A oder auf die Rückseite der Oberflächenschicht C gedruckten Tintenschicht vorliegt,
die Oberflächenschicht C umfasst:
* eine Polymermatrix, die Polyvinylchlorid enthält, und
* einen mineralischen Füllstoff, der Hydrotalkit enthält, wobei Hydrotalkit als Flammschutzmittel verwendet wird und mindestens 3%, vorzugsweise mindestens 5%, bezogen auf das Gewicht der Oberflächenschicht C darstellt.

2. Der mehrschichtige Bodenbelag nach Anspruch 1, **dadurch gekennzeichnet, dass** die Oberflächenschicht C aus Polyvinylchlorid und Hydrotalkit besteht.

3. Der mehrschichtige Bodenbelag nach einem der vorhergehenden Ansprüche, **dadurch gekennzeichnet, dass** das Hydrotalkit 5% bis 50% nach Gewicht, bezogen auf das Gewicht der Oberflächenschicht C, darstellt.

4. Der mehrschichtige Bodenbelag nach einem der vorhergehenden Ansprüche, **dadurch gekennzeichnet, dass** das Hydrotalkit 9% bis 33% nach Gewicht, bezogen auf das Gewicht der Oberflächenschicht C, darstellt.

5. Der mehrschichtige Bodenbelag nach einem der vorhergehenden Ansprüche, **dadurch gekennzeichnet, dass** das Hydrotalkit vom Typ [M^{II}₁₋ₓ M^{III}ₓ (OH)₂] [Aⁿ⁻_{x/n}, yH₂O] ist, mit:
- M^{II} ist ein divalentes Metallkation, das Mg²⁺ und/oder Zn²⁺ umfasst,
- M^{III} ist ein trivalentes Metallkation Al³⁺,
- Aⁿ⁻: Anionen,
- x: Ladungsdichte, zwischen 0,2 und 0,33,
- y ist zwischen 0 und 10,
- n ist zwischen 1 und 3.

6. Der mehrschichtige Bodenbelag nach einem der vorhergehenden Ansprüche, **dadurch gekennzeichnet, dass** das Hydrotalkit in Form von Partikeln mit einer Größe zwischen 200 nm und 1 µm, vorzugsweise zwischen 400 µm und 700 µm, vorliegt.

7. Der mehrschichtige Bodenbelag nach einem der vorhergehenden Ansprüche, **dadurch gekennzeichnet, dass** das Polyvinylchlorid der Polymermatrix weichgemachtes Polyvinylchlorid umfasst.

8. Der mehrschichtige Bodenbelag nach einem der vorhergehenden Ansprüche, **dadurch gekennzeichnet, dass** die Oberflächenschicht C eine Dicke zwischen 0,1 mm und 2 mm aufweist.

9. Der mehrschichtige Bodenbelag nach einem der vorhergehenden Ansprüche, **dadurch gekennzeichnet, dass** die Rückenschicht A ein Polymer aus der Gruppe umfasst, die Polyvinylchlorid, Ethylenvinylacetat-Copolymer und Mischungen davon enthält.

10. Der mehrschichtige Bodenbelag nach einem der vorhergehenden Ansprüche, **dadurch gekennzeichnet, dass** der mehrschichtige Bodenbelag von seiner Basis zu seiner Oberseite folgendes umfasst:
- eine faserige Verstärkungsschicht A' bestehend aus Polyester-Vlies oder Glasfasern,
- eine Klebeschicht B',
- eine Rückenschicht A bestehend aus Polyvinylchlorid,
- eine Dekorschicht B,
- eine Oberflächenschicht C, die umfasst:
* eine Polymermatrix, die Polyvinylchlorid enthält, und
* einen flammhemmenden mineralischen Füllstoff, der Hydrotalkit enthält.

11. Verfahren zur Herstellung eines mehrschichtigen Bodenbelags nach einem der Ansprüche 1 bis 10, umfassend die folgenden Schritte:
- Herstellung der Rückenschicht A, Dekorschicht B und Oberflächenschicht C,
- Zusammenbau der genannten Rückenschicht A, Dekorschicht B und Oberflächenschicht C,
- optional, Herstellung der faserigen Verstärkungsschicht A' und Klebeschicht B', und Zusammenbau der genannten faserigen Verstärkungsschicht A' und Klebeschicht B', um den mehrschichtigen Bodenbelag zu bilden.

## Claims

1. A multi-layer floor covering comprising, from the base to the top of the covering:
- a back layer A,
- a decorative layer B,
- a surface layer C,
wherein:
the decorative layer B being advantageously in the form of a printed substrate or an ink layer printed on the back layer A or on the back of the surface layer C,
the surface layer C comprising:
* a polymer matrix comprising polyvinyl chloride, and
* a mineral filler comprising hydrotalcite, the hydrotalcite being used as a flame retardant and representing at least 3%, preferably at least 5%, relative to the weight of the surface layer C.

2. The multi-layer floor covering according to Claim 1, ***characterised* in that** the surface layer C is composed of polyvinyl chloride and hydrotalcite.

3. The multi-layer floor covering according to any one of the preceding claims, ***characterised* in that** the hydrotalcite represents from 5% to 50% by weight relative to the weight of the surface layer C.

4. The multi-layer floor covering according to any one of the preceding claims, ***characterised* in that** the hydrotalcite represents from 9% to 33% by weight relative to the weight of the surface layer C.

5. The multi-layer floor covering according to any one of the preceding claims, ***characterised* in that** the hydrotalcite is of the type [M^{II}₁₋ₓ M^{III}ₓ (OH)₂] [Aⁿ⁻_{x/n}, yH₂O], with:
- M^{II} being a divalent metal cation comprising Mg²⁺ and/or Zn²⁺,
- M^{III} being an Al³⁺ trivalent metal cation,
- Aⁿ⁻: anions,
- x: charge density, of between 0.2 and 0.33,
- y being between 0 to 10,
- n being between 1 to 3.

6. The multi-layer floor covering according to any one of the preceding claims, ***characterised* in that** the hydrotalcite is in the form of particles with a size of between 200 nm and 1 µm, preferably of between 400 µm and 700 µm.

7. The multi-layer floor covering according to any one of the preceding claims, ***characterised* in that** the polyvinyl chloride of the polymer matrix comprises plasticised polyvinyl chloride.

8. The multi-layer floor covering according to any one of the preceding claims, ***characterised* in that** the surface layer C has a thickness of between 0.1 mm and 2 mm.

9. The multi-layer floor covering according to any one of the preceding claims, ***characterised* in that** the back layer A comprises a polymer selected from the group comprising: polyvinyl chloride, ethylene vinyl acetate copolymer, and mixtures thereof.

10. The multi-layer floor covering according to any one of the preceding claims, ***characterised* in that** the multi-layer floor covering comprises, from its base towards its top:
- a fibrous reinforcing layer A' comprising polyester non-woven fabric or glass fibres,
- an adhesive layer B',
- a back layer A comprising polyvinyl chloride,
- a decorative layer B,
- a surface layer C comprising:
* a polymer matrix comprising polyvinyl chloride, and
* a flame-retardant mineral filler comprising hydrotalcite.

11. Method of manufacturing a multi-layer floor covering according to any one of Claims 1 to 10, comprising the following steps:
- manufacturing the back layer A, decorative layer B and surface layer C,
- assembling said back layer A, decorative layer B, and surface layer C
- optionally, manufacturing the fibrous reinforcing layer A' and adhesive layer B', and assembling said fibrous reinforcing layer A' and adhesive layer B', to form the multi-layer floor covering.
